# EUROPEAN PATENT APPLICATION

(11) **EP 4 571 234 A1**
(43) Date of publication of application: **18.06.2025**
(21) Application number: 23307228.9
(22) Date of filing: 15.12.2023
(51) Int. Cl.: F28F 3/04, F28D 20/02, F28D 15/04, B33Y 80/00

(54) **HEAT SINK DEVICE AND METHOD FOR PRODUCING A HEAT SINK DEVICE**

(71) Applicant: Université de Lorraine, 54000 Nancy (FR); Centre National de la Recherche Scientifique, 75016 Paris (FR)
(72) Inventor: LOHMULLER, Paul, 57000 Metz (FR); KENZARI, Samuel, 54200 Andilly (FR); LAHEURTE, Pascal, 57600 Forbach (FR)
(74) Representative: Office Freylinger

(57) **Abstract**

The invention relates to a heat sink device (10, 110, 210, 310) comprising a porous body (12) with a first region (20), referred to as core region, having a first porosity with open interconnected pores (22), which is at least partially filled with a phase change material, PCM, and a second region (24), referred to as barrier region, having a second porosity, different from the first porosity, with open interconnected pores (26), the barrier region (24) being interconnected with the core region (20) on at least a part of the periphery of the latter, wherein the second porosity is smaller than the first porosity and is configured for preventing melted phase change material to flow therethrough from the core region (20) due to capillarity and/or gravity. The invention also relates to a method for producing a heat sink device (10, 110, 210, 310).

## Description

### FIELD OF THE INVENTION

The present invention generally relates to the field of heat exchange and heat absorption, and more particularly to heat sink devices able to absorb heat, such as heat sink devices comprising a phase change material.

### BACKGROUND OF THE INVENTION

Phase change material possesses the ability to change its physical state within a certain temperature range. A phase change from the solid state to the liquid state occurs when the phase change material (PCM) is heated beyond its melting temperature point. During this melting process, the phase change material absorbs and stores a large amount of latent heat. The temperature of the phase change material remains nearly constant during the entire process. In a cooling process, the heat stored by the phase change material is released into the environment in a certain temperature range and a reverse phase change from the liquid state to the solid state takes place. During this crystallization process, the temperature of the phase change material also remains constant. The high heat transfer during the melting process and the crystallization process, both without any temperature change, is responsible for the phase change material's appeal as a source of heat storage.

However, in order to produce a heat sink device or heat absorbing body that may be used e.g. for cooling electronic components, it is important to ensure the integrity of the heat sink device and in particular to maintain the shape of the PCM. Indeed, the phase change toward a liquid state inevitably leads to the possibility of a leakage. This results in either a partial or total loss of the PCM (and therefore a degradation of the thermal storage capacity of a heat absorbing body or a heat sink comprising such a material), or the degradation of components close to the phase change material.

In order to overcome these drawbacks, different solutions have been developed.

The phase change material may be contained in a physically limited and sealed volume. This is disclosed e.g. in "Energy balance model of combined photovoltaic solar-thermal system incorporating phase change material" by Malvi et al. in Solar Energy 85 (2011) 1440-1446 (DOI:10.1016/j.solener.2011.03.027) where the phase change material is introduced between the frame and the cells of a photovoltaic panel and in "Transient cooling of electronics using phase change material (PCM)-based heat sinks" by Kandasamy et al. in Applied Thermal Engineering 28 (2008) 1047-1057 (DOI: 10.1016/j.applthermaleng.2007.06.010) where cavities between the fins of a heat sink are filled with a phase change material. This however requires an additional, perfectly fluid-tight and leak-free casing.

Alternatively, the phase change material may be previously coated with a layer of a second material having a higher melting point. In practice, the phase change material in its solid state may be shaped as a (generally small) ball or fiber that is coated by different methods (such as e.g. coacervation, suspension polymerization, polycondensation) with a second material having a higher melting point (usually a polymer). Upon melting, the phase change material remains trapped within the coating. Such an approach is disclosed, e.g., in "Development of building materials by using micro-encapsulated phase change material" by Lee et al. in Korean J. Chem. Eng., 24(2) (2007) 332-335 (DOI:10.1007/s11814-007-5054-8).

Further alternatively, a porous matrix material may serve as a support for being infiltrated by the phase change material. This is disclosed, e.g., by patent application US 2012/196040 A1. The PCM is retained in the interstitial spaces by capillary action, against gravity forces.

However, the porosity of the porous material is often insufficiently defined and/or controlled upon production, and PCM comprised in the outermost porosity may still leak over time, resulting in both a loss of phase change material and a reduction of heat absorption capacity.

### OBJECT OF THE INVENTION

It is thus an object of the present invention to provide an improved heat sink device comprising a phase change material as well as a production method thereof, without the aforementioned drawbacks.

### SUMMARY OF THE INVENTION

In order to achieve the above-mentioned object, the present invention proposes a heat sink device comprising a porous body comprising:
a first region, referred to as core region, having a first porosity with open interconnected pores, which is at least partially filled with a phase change material, PCM;
a second region, referred to as barrier region, having a second porosity, different from the first porosity, with open interconnected pores, the barrier region being interconnected with the core region on at least a part of the periphery of the latter.

Remarkably, the second porosity is smaller than the first porosity and is configured for preventing melted phase change material to flow therethrough from the core region due to capillarity and/or gravity.

The inventive heat sink device hence relies on the control of the spatial organization of a porous body, where a core region, designed to contain PCM, has at its periphery a barrier region. The barrier region is porous, but controlled to retain melted PCM within the core region, i.e. avoid that it flows out spontaneously due to gravity or capillary forces. Nevertheless, the second porosity is open, and is configured to be sufficient to allow a forced flow of melted PCM, e.g. under pressure / due to external forces. Hence, a filling operation of the core region with PCM through the barrier region is possible, but the controlled porosity of the barrier region will retain the melted PCM within the core region, and prevent spontaneous leakage of melted PCM.

The invention hence essentially relies on the presence of two distinct porosities and the control of the spatial organization and interconnection of the porosities to both enhance a stockage (i.e. filling) ability of the heat sink device and prevent loss of phase change material. A (spatially) localized control of the porosity of the porous body thus enables the design/conception of regions with various effects on the phase change material, in particular in its melted state, such as e.g. storage region, release region, or transfer region.

As will be known to those skilled in the art, the interaction between the contact angle, pore diameter, and the type of fluid involved (wetting or non-wetting) collectively determines the capillary forces in a porous medium.

Accordingly, the barrier effect can be advantageously achieved by controlling the second porosity: the size of the pores of the second porosity is defined in consideration of PCM/porous body material couples.

More specifically, to prevent the flow of melted PCM due to capillarity and/or gravity, the pores of the second porosity have a size smaller than pores of the core region.

Controlling the size of the pores of the second porosity depending on the capillary action (relative to each infiltrating/infiltrated couple i.e. phase change material / porous body material) allows to counterbalance the influence of gravity on the melted phase change material, thereby resolving the problem of liquid leakage (by preventing liquid to leak) and making it possible to consider applications of the inventive heat sink device in all orientations without risk of losing phase change material.

As has been understood, the barrier layer prevents leakage of melted PCM out of the core region. It is thus preferred that a majority, if not all of the periphery of the core region is surrounded with barrier region. This being said, in some applications, some parts of the periphery, e.g. those opposed to gravity direction, could be left uncovered. To avoid PCM leakage, the core region is advantageously enclosed by the barrier region and/or by dense material. That is, the PCM region is entirely surrounded, at least in part by barrier region, and possibly by dense material.

In the present text, "dense material" means substantially non-porous, preferably non-porous material, i.e. a dense material is a material without a substantial porosity, as opposed to the porous body. Especially, the melted PCM cannot flow through the dense material. The barrier region and/or the dense material are preferably in direct contact with the core region.

In embodiments, the heat sink device further comprises a heat-conductive substrate of dense material that is arranged in contact with at least part of the periphery of the porous body, the remainder of the core region being enclosed by said barrier region. The heat conductive substrate has two functions. First, it effectively prevents melted PCM to leak out of the core region of the porous body in a direction normal to the contact therebetween. Secondly, it forms the hot side of the heat-sink device, i.e. the part that is facing the heat source. As the heat-conductive substrate is dense and has good thermal conductivity, it increases heat transfer between the porous body with phase change material and the heat source, such as e.g. electronic components, thereby improving/enhancing heat absorption by the heat sink device.

In embodiments, the heat sink device further comprises a convection cooling structure. Such a convection cooling structure advantageously allows for heat transfer between the porous body and ambient air (or any other ambient fluid) by convection, thereby dissipating the heat from the barrier region and the core region. This results in an enhanced cooling effect overall, absorbing more heat, e.g. from nearby electronic components. The convection cooling structure thereby enhances/improves efficiency of the heat sink device. The convection cooling structure is shaped and dimensioned so as to maximize the surface for heat exchange with an ambient fluid (e.g. ambient air) while preventing retention of melted PCM in the structure. In other words, melted PCM can freely flow through the convection cooling structure.

In some embodiments, the convection cooling structure is formed as a third region of the porous body, referred to as convection region, having a third porosity with open interconnected pores, the third region being arranged to be (fluidly) interconnected with the core region via the barrier region. The third porosity is greater than the second porosity and configured to allow free flow of melted material therethrough.

Alternatively, the convection cooling structure comprises cooling fins extending from the (outer - in opposition to the core region being at the inner) periphery of the barrier region. The fins may present any shape known to a skilled person, in particular they may be straight or have a wavy shape, and they are dimensioned and arranged so as to enhance a cooling effect by forced convection between the fins.

The function of the core region is to store the PCM. The control of its (first) porosity is not as critical as for the barrier region and the convection region. It may have rather larger pores, for ease of flow during filling. Alternatively, the porosity of the PCM could also be defined to retain the melted PCM by capillary action, in order to further limit potential leakage. The core region may be partially or entirely filled with PCM, e.g. more than 50 or 75% of the total pore volume may be filled with PCM, or between 95% and 100%.

In some practical embodiments of the heat sink device, the pores in the barrier region have a size S2 of less than 100 µm, and/or the pores in the core region have a size S1 between 100 and 400 µm, and/or the pores in the convection region have a size S3 greater than 400 µm. It is considered that such combination of pores provides a good compromise for a number of combination of materials (body material/PCM).

Depending on embodiments, the pores within a region can have a given dimension or can have a gradient of size within a given range. Accordingly, the term "pore size Si" can refer to a discrete value or to a range of values.

Referring to the core region, the pores may have a size S1 strictly between 100 and 400 µm, which is to be understood as covering the following embodiments:
a) at least 95 % of the pores of the second region have a size equal to S1 ± 10%, where 100 µm< S1 <400 µm; or
b) the pores size forms a gradient between a size S1a± 10% and a size S1 b± 10%, where S1a and S1 b are within the range 100 to 400 µm, and S1a < S1b.

The term 'size' of the pores refers to the equivalent diameter relative to the pore cross-section, whether they are of round or tubular form. The term 'equivalent diameter' is to be understood as diameter for a circular opening or, for a noncircular opening, the diameter of a circle that has substantially the same noncircular opening area.

The size of the pores may be experimentally determined by providing cross-sections of the porous body and taking images of the cross-sections using optical profilometry and/or optical or electron microscopy, and then measuring a given number of pores on each picture. The size of the pores corresponds to an average of the measured pore sizes.

While the size of the pores of each porosity depends on the interaction between materials used for both the porous body and phase change material (e.g. surface tension and contact angle for preventing or allowing melted phase change material to flow through some regions of the porous body), such sizes for the porosities of the core region, barrier region and convection region advantageously allow to achieve the desired effects (preventing/allowing flow of melted phase change material) for numerous combinations of (heat conductive) porous body materials and phase change material which may be applicable in everyday life for use as heat sink, e.g. in electronic devices.

The porous body is advantageously made from thermally conductive material(s), preferably having a thermal conductivity of at least100 W.m⁻¹.K⁻¹. The different body regions may be made from the same material or from different materials. The material(s) used for forming the porous body has a melting temperature higher than a melting temperature of the PCM. For example, suitable materials for the porous body, respectively the regions, are metals and metallic alloys, in particular, copper, titanium, cobalt, chromium, iron, aluminum or an alloy thereof.

In embodiments, the phase change material has a melting temperature between 40 and 70°C, which is convenient for applications in the electronics industry. The phase change material may e.g. be selected from a group comprising fatty acid, fatty alcohol, hydrated salts and mixtures thereof, more preferably the phase change material is selected from a group comprising lauric acid, stearic acid, hexadecanol (preferably 1-hexanedecanol), octadecanol (preferably 1-octadecanol) and mixtures thereof. As will be clear to those skilled in the art, the PCM to be employed in the heat sink device may be determined on a case-by-case basis taking into consideration the temperature to which the device would be subjected, however such phase change material advantageously have a melting temperature in a range substantially corresponding to temperatures commonly achieved in electronic devices.

In embodiments, the heat sink device, respectively the porous body may comprise a plurality of core regions, spaced from one another, each core region being at least partially surrounded by a barrier region.

The plurality of core regions advantageously increases the storage capacity for phase change material while minimizing the risk of full leakage thereof in the event of a failure/damage of one of the core regions. Moreover, the different core regions may be each partially filed with a different phase change material, the phase change materials having different/distinct melting temperatures, to improve efficiency of the heat sink device over a wider range of temperatures and/or versatility of one heat sink device to be used for different applications.

In embodiments, the porous body is obtained by additive manufacturing, preferably by selective laser melting, selective laser sintering, stereolithography or digital light processing, more preferably by selective laser melting. Additive manufacturing advantageously allows to produce a wide variety of customized, need-tailored designs such as porous bodies with controlled porosities (e.g. in terms of size(s) and interconnectivity).

In embodiments, the barrier region represents 0.5% to 10% with respect to the volume of the porous body and/or the core region represents 10% to 25% with respect to the volume of the porous body and/or the convection region represents 70% to 90% with respect to the volume of the porous body. Additionally or alternatively, the phase change material represents 5% to 25% with respect to the volume of the heat sink device and/or the porous body represents 20% to 40% with respect to the volume of the heat sink device and/or empty pores of the porous body represents 35% to 75% with respect to the volume of the heat sink device. In some embodiments, the heat sink device may present a volume between 1 cm³ and 100 cm³.

In embodiments, the porous body is shaped as a lattice structure matrix. The lattice structure matrix may be constituted of or comprise an elementary geometric pattern which is repeated periodically in the space, said pattern being able to undergo geometric deformations according to its position in the space. This repetition can be done by translation of the pattern, and/or by any symmetry, for example central, axial or planar. Thus, in in the present text "pattern" means a pattern of a Bravais lattice, for example, a cubic, parallelepiped, rhombohedral pattern, or a pattern of the hexagonal prism type, etc.

In preferred embodiments, the pattern is a cubic pattern and/or the lattice structure matrix is a beam structure matrix, the diameter of said beams being preferably of 150 to 500 µm.

As explained above, the porous body comprise at least two different regions (the core region and the barrier region) with different but interconnected porosities. The beam structure matrix may thus be graded with relative densities, preferably the beams lengths and/or diameters varies within the lattice structure matrix (i.e. the porous body), with a constant arrangement.

In such embodiments, the porous body may be characterized by lattice parameters. In the present text, lattice parameter means a length characterizing the periodicity of an arrangement, i.e. the distance between two repetitions of the elementary geometric pattern. Moreover, lattice parameters directly act on the scale of the porous body. Indeed, according to the evolution of specific surface (the smaller the lattice parameter, the higher the specific surface in a given volume), lattice parameter has an influence on the quantity of retained PCM and on thermal conductivity between the core region of the porous body and the PCM. The core region may present a lattice parameter of 1 to 5 mm while the barrier region may present a lattice parameter of 0.6 to 1.5 mm, the lattice parameter of the core region being however greater than that of the barrier region.

According to another aspect, the invention relates to a method for producing a heat sink device, the method comprising the steps of:
- producing a porous body comprising
   a first region, referred to as core region, having a first porosity with open interconnected pores;
   a second region, referred to as barrier region, having a second porosity with open interconnected pores, the barrier region being interconnected with the core region on at least a part of the periphery of the latter;
   wherein the second porosity is smaller than the first porosity and is configured for preventing melted phase change material to flow therethrough from the core region due to capillarity and/or gravity;
- providing a phase change material and melting the phase change material;
- impregnating the porous body with the melted phase change material such that the first porosity is at least partially filled with the phase change material;
   wherein impregnating comprises forcibly introducing the melted phase change material into the core region through the barrier region.

The inventive method hence relies on the control of the spatial organization of a porous body, where a core region, designed to contain PCM, has at its periphery a barrier region. The barrier region is porous, but controlled to retain melted PCM, i.e. avoid that it flows out spontaneously due to gravity or capillary forces. Nevertheless, the second porosity is open, and is configured to be sufficient to allow a forced flow of melted PCM, e.g. under pressure / due to external forces. Hence, a filling operation of the core region with PCM through the barrier region is possible, but the controlled porosity of the barrier region will prevent spontaneous leakage.

A heat sink device produced by the present inventive method presents all the advantages of a heat sink device according to the first aspect of the invention.

In some embodiments, the melted PCM is forcibly introduced into the porous body by means of a pressure difference. The pressure difference may be resulting from mechanically pushing the PCM into the porous body or from drawing the melted PCM into the porous body under assistance of vacuum.

In preferred embodiments, the heat sink device further comprises a convection cooling structure. According to such embodiments, during the impregnation step, the melted PCM is introduced into the core region via the convection cooling structure and the barrier region and the method for producing a heat sink device further comprises the steps of:
- solidifying the PCM
- heating the porous body filled with PCM in order to melt the PCM and allow the PCM to flow out of the convection cooling structure.

Such steps of solidifying and then heating the porous body filled with PCM advantageously ensure that any phase change material not contained/infiltrated in a portion of the heat sink device able to retain it in its melted phase (i.e. a region enclosed by the barrier region and/or a dense material) would be removed prior to the use of the heat sink device. In particular, it would ensure that no melted PCM would escape the heat sink device in the vicinity of e.g. an electronic component or device, thereby preventing such a component or device from being damaged by the phase change material.

In embodiments, the porous body is produced by additive manufacturing, preferably by selective laser melting, selective laser sintering, stereolithography or digital light processing, more preferably by selective laser melting. Preferably, the porous body is formed as lattice structure, each region having its own lattice structure parameters and lattice structure topology (i.e. matter organization in the periodically repeated volume) to provide the prescribed porosity.

The porous body may be made of metal or a metallic alloy, preferably comprising aluminum, copper, titanium, cobalt, chromium, iron or an alloy thereof.

The phase change material is selected from a group comprising fatty acid, fatty alcohol, hydrated salts and mixtures thereof, preferably the phase change material is selected from a group comprising lauric acid, stearic acid, hexadecanol (preferably 1-hexadecanol), octadecanol (preferably 1-octadecanol i.e. stearylic alcohol) and mixtures thereof.

Benefits of the inventive heat sink device may be summarized as follows:
- High versatility of applications due to wide range of melting temperature of phase change material;
- Leakage of melted phase change material outside the porous body prevented by the barrier portion;
- Increased heat absorption capacity and improved stability over time;
- Ease of implementation and reduced to no waste generating production method by additive manufacturing.

### BRIEF DESCRIBTION OF THE DRAWINGS

The present invention will now be described, by way of example, with reference to the accompanying drawings, in which:
Fig. 1 is a principle drawing illustrating a first embodiment of a heat sink device according to the invention;
Fig. 2 is a principle drawing illustrating a second embodiment of a heat sink device according to the invention;
Fig. 3 are principle drawings illustrating the impregnation process of the porous body by the phase change material;
Fig. 4 is a graph showing the infill rate vs. remelting time for three embodiments of the invention and six comparative examples;
Fig. 5 is a plot of contact angle (on an aluminum substrate) vs. temperature for selected PCMs; and
Fig. 6 are pictures of two other embodiments of the present heat sink device.

### DETAILED DESCRIPTION OF PREFERRED EMBODIMENTS

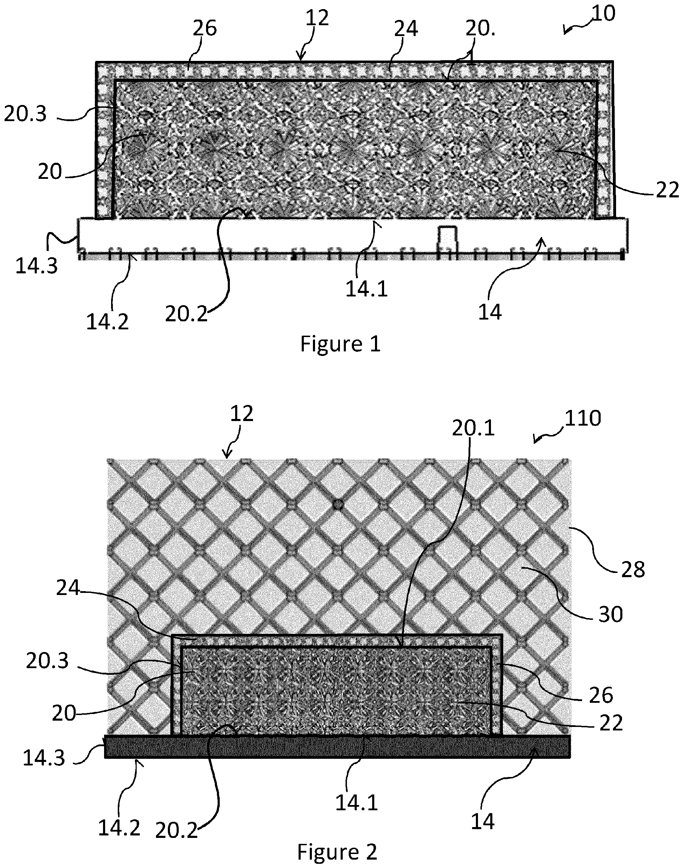

Embodiments of the inventive heat sink device will be described with reference to Fig.1 and Fig.2.

A first embodiment of a heat sink device 10 is shown in Fig.1. The heat sink device 10 comprises a porous body 12 and a substrate 14.

The porous body 12 is the main part of the heat sink device 10. It comprises a first region 20, or core region, and a second region 24, or barrier region.

The core region 20 has a predetermined shape, which may for example be generally cylindrical, parallelepipedal, conical, frusto-conical, spherical (or partially spherical) or dome-shaped. In the embodiment of Fig.1 the core region is disk-shaped and has an upper side 20.1, an opposed lower side 20.2 and a peripheral wall 20.3. This is only an example and other shapes can be envisaged depending on the application.

As can be seen in Fig.1, the disk-shaped porous body 12 is arranged on a foiltype substrate 14; accordingly, the porous body 12 has a rectangular vertical cross-section (as shown in Fig.1) but the cross-section in a plane parallel to the substrate 14 (i.e. perpendicular to Fig.1) is circular.

The core region 20 has a first porosity with open interconnected pores, which is filled, at least partially, with a phase change material. In other words, the phase change material is received i.e. contained in the pores 22 of the first porosity. "Filled at least partially" means that at least some of the pores of the core region are filled with PCM. For example, more than 50 or 75% of the total pore volume may be filled with PCM, or even between 90% and 100%.

The outer periphery of the barrier region may have substantially the same general shape as the core region 20 (albeit having different dimensions) as visible on Fig.1, however other shapes are also within the scope of the present disclosure.

The barrier region 24 is shaped and arranged so as to at least partially enclose the core region 20. Here, the barrier region 24 is provided to enclose the periphery of the core region 20 that is not in contact with the substrate 14, i.e. along the upper side 20.1 and the peripheral wall 20.3.

The barrier region 24 has a second porosity with open interconnected pores 26 which are smaller than the pores 22 of the first porosity and are designed to retain melted phase change material in the core region, i.e. prevent melted phase material to (freely) flow therethrough.

The first porosity and the second porosity are hydraulically interconnected in the contact areas between the core region 20 and the barrier region 24. In other words, at the interface, pores 22 of the first porosity are fluidly connected to the outside environment of the porous body 12 either directly (at the lower side) or through the pores 26 of the second porosity (at the upper side and peripheral wall). Accordingly, the first and second porosity form interconnected channels that can convey a liquid from one region to the other. Preferably all channels of the first porosity are open at the interface with the second region 24 so as to facilitate impregnation of the core region 20 by the phase change material. Conversely, all channels of the second porosity are preferably open at the interface with the first region 20. However, it is possible and still within the scope of the present disclosure that some channels of the second porosity are closed at the interface between the second region 24 and ambient environment.

The core region 20 and the barrier region 24 are preferably made integral with one another, and both made in a same material, so as to ensure an (at least partial) interconnection between the first and second porosity. It is however still within the scope of the present disclosure to manufacture the barrier region 24 in a material different from the core region 20.

The porous body is preferably made from material(s) having good conductivity (e.g. higher than 100 W.m⁻¹.K⁻¹) and a melting temperature higher than a melting temperature of the PCM. For example, suitable materials for the porous body, respectively the regions, are metals and metallic alloys, in particular, copper, titanium, cobalt, chromium, iron, aluminum or an alloy thereof.

The substrate 14 may be considered as a base layer which supports the porous body 12. It is made from a heat-conductive dense material, such as e.g. materials also suitable for the porous body 12 (including but without being limited to metal or a metallic alloy e.g. comprising aluminum, copper, titanium, cobalt, chromium, iron or an alloy thereof). As the substrate 14 is made from a dense material, it is not porous.

The substrate 14 is typically a planar or flat element, e.g. a foil or a plate, that may present a circular, rectangular or other shape, with a first side 14.1, an opposed second side 14.2 and a peripheral wall 14.3 connecting the first and second sides. This is however only an example and other shapes may be envisaged.

As seen on Fig.1, the porous body 12 is so arranged on the substrate 14 that the lower side 20.2 of the core region 20 is in direct contact with (applied against) the first side 14.1 of the substrate 14, i.e. the core region 20 directly contacts the substrate 14.

In such embodiment, the core region 20 is enclosed on its lower side 20.2 by the substrate 14 while the upper side 20.1 and peripheral wall 20.3 of the core region 20 are enclosed by the barrier region 24.

For ease of manufacturing, the substrate 14 of dense material may be made integral with the porous body 12, in the same material, such as e.g. in aluminum, in particular via additive manufacturing. It is however still within the scope of the present invention to produce the substrate separately from the porous body and in a different material, prior to attaching the heat-conductive substrate to the porous body by any suitable means known to the skilled person. For example, the porous body made be made in aluminum and the substrate may be made in copper, the substrate being attached to the porous body by brazing or welding.

Fig.2 represents a second embodiment of a heat sink device 110. In addition to the heat sink device 10 according to the first embodiment as displayed on Fig.1, the device 110 further comprises a convection cooling structure formed as a convection region 28. In other words, the second embodiment differs from the first embodiment in that the porous body further comprises a third region 28, referred to as convection region 28.

The core region 20, the barrier region 24 and the substrate 14 are similar in the first and second embodiments. They are designated with the same reference numerals and will not be further described with respect to the second embodiment.

The convection region 28 of the non-limiting embodiment of Fig.2 has a third porosity with open interconnected pores 30 arranged to be interconnected with the porosity of the core region 20 via the barrier region 24.

Although the convection region 28 is displayed on Fig.2 with a different shade of grey than the barrier 24 and core 20 regions - for the sake of clarity, in order to better distinguish the different regions on the principle drawing - it is preferably made integral with the core and barrier regions, and in the same material. It is however still within the scope of the present disclosure that different materials may be used for the convection region and the barrier and/or core region(s), depending on the intended use and the manufacturing/production method of the porous body.

As a rule, the size of the pores 22, 26, 30 of each porosity (first porosity of the core region, second porosity of the barrier region and - if applicable - third porosity of the convection region) is determined depending on the kind of materials used as phase change material and as matrix material for the porous body 12, and the function of each region (e.g. preventing or allowing melted phase change material to flow therethrough). In particular, the size of each porosity is determined to be either bigger or smaller than the capillary length of melted phase change materials on a given material.

### Production of the porous body>

As explained above, the porous body forms a kind of matrix with different regions having the prescribed porosities. In the embodiment of Fig.2, the body has three regions that are adjacent one another with connected porosities. That is, the pores of the convection region communicate with the pores of the barrier region, which in turn communicate with the pores of the core region. The fact that the porosities are interconnected implies that each region only communicates with its adjacent region:
- at the core/barrier interface: pores or the core region communicate with pores of the barrier region. There is no other fluid path to and from the core region other than through the barrier region.
- at the barrier/convection interface: pores or the barrier region communicate with pores of the convection region. On the external side, there is no other fluid path to and from the barrier region other than through the convection region.

Such structures can be obtained by assembling and bonding together the different regions, manufactured independently.

However, additive manufacturing processes, offering great design freedom, can be advantageously used for the fabrication of the porous body in one piece. In this context, the porous body can be designed as a hybrid material, i.e. a material that is structured in a given volume, according to predetermined organization and scale in order to respond to a specific application.

Of particular interest are additive processes for manufacturing so-called "lattice structures": an assembly comprising or consisting of an elementary geometric pattern, in particular cubic, which periodically repeats in a volume. Preferably, the lattice structure is a beam type lattice structure. In embodiments, the lattice structure exhibits a density gradient or topology gradient. Such lattice structure can be conveniently manufactured by selective laser melting (SLM).

Such lattice structure materials and their manufacture are known in the art of hybrid / composite materials, see e.g. FR 3 118 602 A1 or Ph.D Thesis "Metal infiltrated mesostructured materials with optimization of architectured scaffold" by Paul Lohmuller, Université de Lorraine, 2019 (https://hal.univ-lorraine.fr/tel-02860906).

In brief, the patterns used to generate the porous body matrix are obtained similarly to the Bravais lattice of crystallography. They are composed of a periodic elementary volume (cube, hexagon, etc.), of a symmetry system compatible with the elementary volume and of the placement of a first beam in this volume. The correct positioning of the first beam coupled with the chosen symmetry system enables the generation of an infinity of different structures, called lattices. In fact, for two patterns, when the first beams have a positioning in the close elementary volume, then the two structures obtained are able to present close spatial organizations.

In the context of the invention, different regions of the porous body are manufactured with respective lattice parameters, to achieve the respective porosities of each region. Hence each region defines a porous network formed by an ordered assembly of micro-beams, with given topology, lattice parameters and beam diameter.

Within a region, the beams meet at the nodes of the lattice structure. At the interface between two regions, the lattice structure is adapted to form a transition between one lattice structure and the other, to ensure continuity of the porous network.

At the design stage, semi-phenomenological capillary rise models may be used to evaluate the capillary effects within a given pattern/lattice, in particular having regard according to the size of the pattern (lattice parameter) and diameter of its beams. Such model thus enables the determination of the lattice parameter and beams diameter which are the most suitable for preventing or allowing a desired melted PCM to flow therethrough.

### < Impregnation with phase change material >

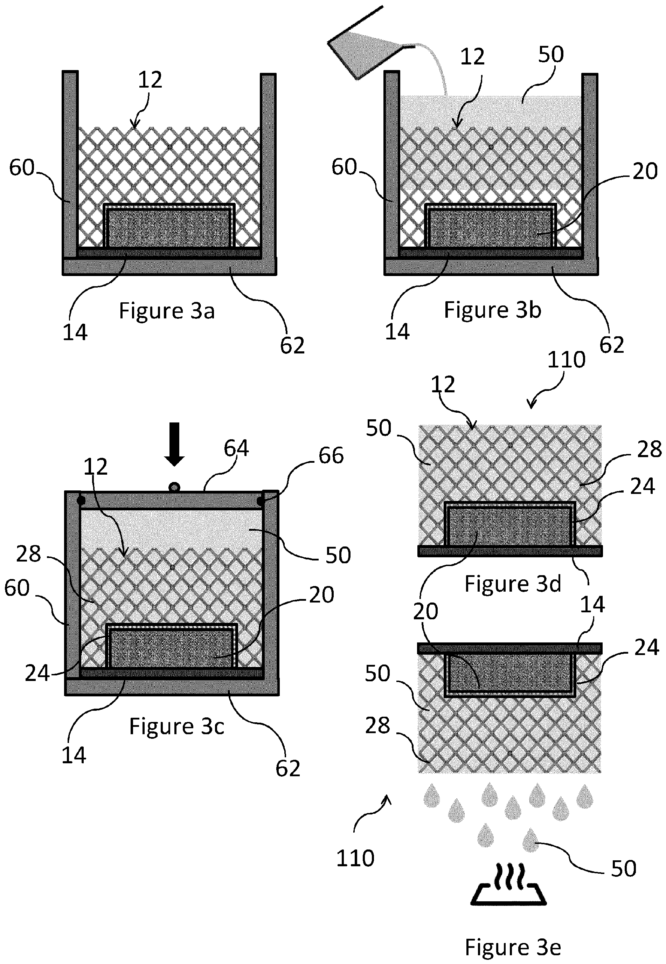

An example of PCM impregnation process of the porous body of Fig.2 will now be described with reference to Fig.3.

The porous body 12 with the three regions 22, 24, 26 and the substrate 14 is placed in a container 60, the substrate 14 lying on the bottom 62 of the container 60 (Fig. 3a). Melted PCM, noted 50, to be infiltrated into the core region 20 of the porous body 12 is poured over the porous body (Fig. 3b). Preferably, the porous body 12 is heated to a temperature above the melting temperature of the PCM 50 so as to facilitate impregnation. A piston 64 with a peripheral seal 66 is used to close the container 60 and apply a pressure to the melted PCM, in order to forcibly introduce the melted PCM 50 into the core region 20 through the convection region and then the barrier region 24, by mechanical pushing (Fig. 3c). After the desired fill rate of the core region 20 is achieved, the impregnated porous body 12 is left to cool down to room temperature for the PCM to solidify/crystallize, before removing the impregnated porous body from the container 60 (Fig. 3d). Next, as illustrated, the impregnated porous body is then heated for PCM to melt (first melting), such that PCM contained in the convection region can flow out by gravity. During this heating step of Fig.3 e), the porous body is preferably maintained in a tilted position with respect to its position during impregnation so as to ensure that all re-melted PCM flows out of the convection region. Once the melted PCM has drained out of the convection region, the porous body is ready for use, forming the present heat sink device 110.

### <Examples>

For applications as heat sink for electronic parts/circuits, an aluminum alloy (AlSi12) is considered to form the porous body and possible PCM include lauric acid, 1-hexadecanol, 1-octadecanol and stearic acid, which have a boiling point between about 43 and 66°C. The inventors measured the contact angle θ of liquid lauric acid, 1-hexadecanol, 1-octadecanol and stearic acid on aluminum.

Table 1 below summarizes the chemical formula, melting temperature (Tf), related enthalpy (ΔH) change for the considered PCMs.

**[Table 1]**

| | Chemical formula | Tf (°C) | ΔH (J.g⁻¹) |
|---|---|---|---|
| Lauric acid | CH₃-(CH₂)₁₀-COOH | 43,6 | 262 |
| 1-hexadecanol | CH₃(CH₂)₁₅OH | 48,9 | 230 |
| 1-octadecanol | CH₃(CH₂)₁₇OH | 57,2 | 220 |
| Stearic acid | CH₃-[CH₂]₁₆-COOH | 65,8 | 213 |

As is known, the interaction between the contact angle, pore diameter, and the type of fluid involved (wetting or non-wetting) collectively determines the capillary forces in a porous medium.

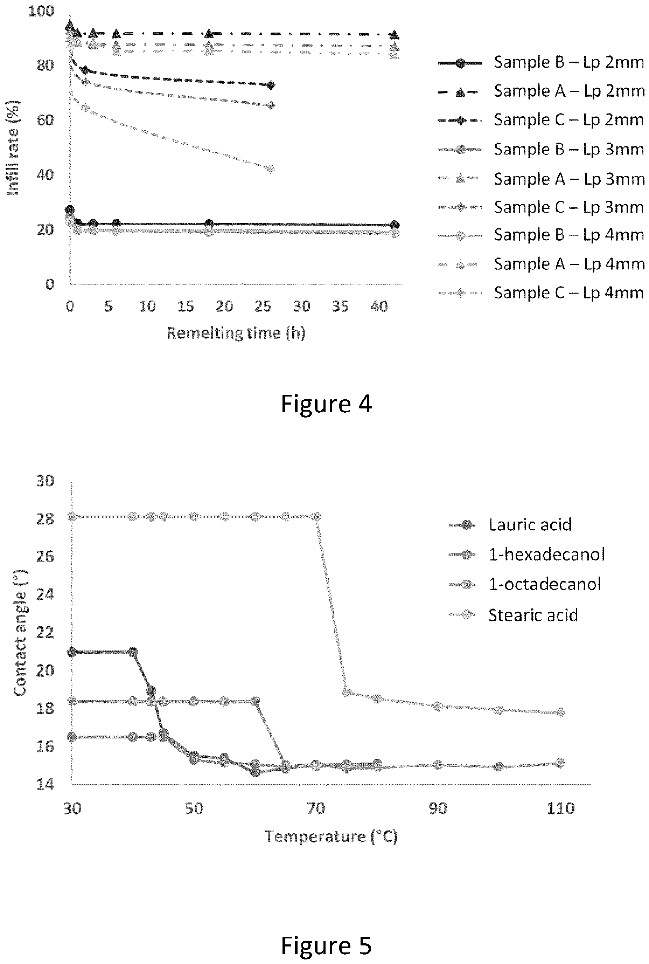

Fig.5 shows the evolution of the contact angle for the selected PCMs in function of temperature, on an aluminum substrate.

Heat sink device production can be separated in three different steps. Firstly, the porous body is numerically designed. This step consists on the selection of topology, lattice parameter and beam diameter according to capillary rise model and manufacturability limitations. Production of unit-cell are done by computer simulation based on the work of Favre et al. (10.1016/j.addma.2018.02.020). Volumes of the different regions are then paved by the selected unit-cell and merge together using 3DXpert software (product of 3Dsystem). 3DXpert software was also used for the numerical pre-processing before additive manufacturing (part placement, support structure design, process parameters assignment and slicing). Secondly, the porous body is produced by additive manufacturing of the device, using an A!Si12 alloys powder with particle size distribution ranging from 10 to 45 µm (produced by 3DSystem) on a 3DSystem ProX DMP 200 apparatus by laser powder bed fusion process. The main process parameters were as follows: power 170 W, scanning speed 1800 mm.s⁻¹, hatching distance 90 µm and slice height 30 µm). Production was made under a passive atmosphere of argon. The support was then removed and residual powder in different porous regions are evacuated by a compressed-air system. Finally, the infiltration (or infill) step was performed using a cylindric mould and a piston of AlSi12 alloys. The mould filled by the PCM, piston and porous body are heated in a furnace (Memmert UF30) at a temperature corresponding to the melting point of the used PCM plus ten degree Celsius during 1 hour. The device is then put in the mould and manual pressure is applied using the piston. Porous body infiltrated with PCM is extracted from the mould and cooled at ambient temperature. After PCM solidification, the porous body infiltrated with solidified PCM is placed in the furnace at the same temperature as before, in a tilted position (about 10 degree) in order to remove the excess of PCM.

PCM filling rate and retainment were measured using comparative weighting before PCM infiltration and after infiltration or heating cycle. Weight was measured on a Kern PCB balance with a resolution of about 1 mg. Retainment tests consist of a heating cycle at different temperature and varying durations in a Memmert UF30 furnace, and weighting the heat sink device prior and to and after each heating cycle.

To illustrate the benefits of the invention, several samples types have been prepared.

Sample A: samples according to the present disclosure and having the structure of Fig.1: core region / barrier region.

Sample B: samples comprising a lattice type porous body that is filled by capillarity with PCM, as described in FR 3 118 602.

Sample C: samples comprising a lattice type porous body with a core region only, i.e. without barrier region.

For all examples, the material of the porous body is an aluminum alloy, namely AlSi12.

The properties of the lattice structure were as follows.

Samples A, B and C present the same core structure inscribed in a cylindrical volume with a diameter of 30 mm and a height of 8 mm. The used unit-cell is called 0.175_0.325 according to the model presented by Favre et al. (10.1016/j.addma.2018.02.020). Three lattice parameters (Lp) were tested with length of 2, 3 and 4 mm respectively. Relative density (fraction of materials in a given module) is set at 30% leading to beam diameter respectively equal to 160 µm, 240 µm and 320 µm. All samples were placed on fully dense plates with a diameter of 34 mm and a height of 2 mm.

Sample A and B present the same barrier zone, which correspond to a cylindrical shell fitting the core volume with a thickness of 1 mm. The used unit-cell is call diagonal of 0.5_0.5 according to the model presented by Favre et al. (10.1016/j.addma.2018.02.020). Lattice parameter is equal to 1 mm and beam diameter was equal to 520 µm leading to a relative density about 85%. All samples were filled with pure lauric acid as PCM.

Fig.4 shows for the various examples the infill rate (or infill percentage - ratio of solid material to empty space, i.e. pores) vs. remelting time.

As apparent, examples A show the best behavior: they have higher initial infill rate than devices of sample B and C, i.e. they contain more phase change material.

Without a barrier region (samples C), the infill rate significantly decreases over re-melting time (i.e. over a time wherein the device is submitted to a temperature sufficient to induce a melting of the phase change material filling the porous body), i.e. phase change material flows outside the heat sink device / leaks from the heat sink device. Such a leak is prevented by the barrier region of the devices according to the present invention - samples A.

Relying on a porous body designed for capillary retention - as for samples B - does permit good PCM retention but only allows for a comparatively much lower filling rate.

### <Pores size determination>

The size of the pores may be determined as follows.

Measurements were carried out on representative samples of the different regions with a surface area of at least 1 cm² and a thickness corresponding to 1 time the lattice parameter, which are produced independently from the porous body to infiltrate and are directly analyzed by one of the methods described below. This is of advantage when using additive manufacturing. No cutting or post-processing step of the samples is required.

Alternatively, the measurements may be carried out on samples cut from actual products.

As will appear, different methods are available. They basically involve determining the pore size as an average of a plurality of measurements of the size, via a plurality of measurements of pore size (diameter or equivalent diameter) in a plurality of images representative of the zone of interest.

### 1^{st} method:

Measurements for a given region of porosity were done by optical profilometry (TesaViso manufactured by Tesa). For each region, five images, each representative of the region of interest, are taken and analyzed by an image analysis software (e.g. ImageJ) to allow the measurement of each pore (12 pores per image), the final size corresponding to the average of the sixty measurements.

### 2^{nd} method:

The measurement is carried out using electron microscopy. Images are recorded using electron microscopy (with a Jeol 6490 electron microscope), by applying an acceleration voltage of 20 kV and a working distance of 4 mm in secondary electron imaging at a magnification of x100 (measurement resolution: 0.5 µm i.e. twice the size of a pixel). As for the first method, five images are recorded for each region, each image presenting twelve pores. All sixty pores are measured using an image analysis software (ImageJ) and the size of the pores corresponds to the average of the sixty (5x12) measurements.

Alternatively, images may be recorded by optical microscopy (using a Zeiss Imager M1) with a x50 magnification (measurement resolution: 3.2 µm). In this case, each image presents twenty-five pores and three images are recorded for each region. The size of the pore corresponds to the average of the seventy-five (3×25) measurements.

### <Further embodiments>

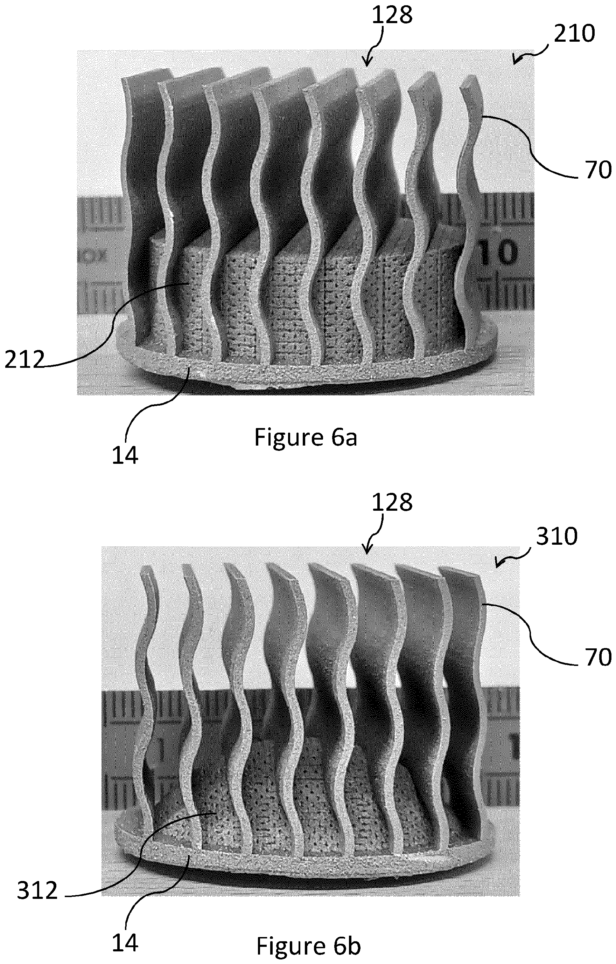

Fig. 6 shows alternative embodiments of the invention, where the heat sink device 210, 310 present a convection cooling structure 128 taking the form of cooling fins 70.

The cooling fins 70 are in heat exchange relationship with the porous body 212, 312 and mainly arranged on the side opposite the substrate 14, although they may also extend down to the substrate surrounding laterally the porous body 212, 312. Although not visible, the porous body is built similar to Fig.1, i.e. it consists of a core region entirely surrounded by a barrier layer (except at the substrate interface). In Fig.6a the porous body is disk-shaped, whereas in Fig.6b it is dome-shaped.

The fins 70 are thus in heat-exchange relationship with the porous body 212, 312 and here in direct contact with the outer layer, i.e. the barrier layer.

The fins are dimensioned and arranged to allow cooling by convention (passive or forced).

The fins 70 are preferably made integral with the porous body 212, 312, and in the same material. The fins may present any shape known to a skilled person, in particular they may be straight or have a wavy shape so as to further enhance heat transfer with ambient environment.

## Claims

1. A heat sink device (10, 110, 210, 310) comprising:
a porous body (12) comprising:
a first region (20), referred to as core region, having a first porosity with open interconnected pores (22), which is at least partially filled with a phase change material, PCM;
a second region (24), referred to as barrier region, having a second porosity, different from the first porosity, with open interconnected pores (26), the barrier region (24) being interconnected with the core region (20) on at least a part of the periphery of the latter;
wherein the second porosity is smaller than the first porosity and is configured for preventing melted phase change material to flow therethrough from the core region (20) due to capillarity and/or gravity.

2. The heat sink device (10, 110, 210, 310) as claimed in claim 1, wherein the core region (20) is enclosed by the barrier region (24) and/or a dense material.

3. The heat sink device (10, 110, 210, 310) as claimed in any of the preceding claims, comprising a heat-conductive substrate (14) of dense material arranged in contact with at least part of the periphery of the porous body (12), the remainder of the core region (20) being enclosed by said barrier region (24).

4. The heat sink device (110, 210, 310) as claimed in any of the preceding claims, further comprising a convection cooling structure (28, 128).

5. The heat sink device (210, 310) as claimed in claim 4, wherein the convection cooling structure comprises cooling fins (70) extending from the periphery of the barrier region (20).

6. The heat sink device (110) as claimed in claim 4, wherein the convection cooling structure (28) is formed as a third region of the porous body, referred to as convection region (28), having a third porosity with open interconnected pores (30), the third region being arranged to be interconnected with the core region (20) via the barrier region (24), the third porosity being greater than the second porosity and configured to allow free flow of melted PCM therethrough.

7. The heat sink device (10, 110, 210, 310) as claimed in any of the preceding claims, wherein
the pores in said barrier region (24) have a size S2 of less than 100 µm; and/or
the pores in said core region (20) have a size S1 strictly between 100 and 400 µm; and/or
the pores in said convection region (28) have a size S3 greater than 400 µm.

8. The heat sink device (10, 110, 210, 310) as claimed in any of the preceding claims, wherein the porous body (12) is made from thermally conductive material(s) having a thermal conductivity of at least 100 W.m⁻¹.K⁻¹, preferably the porous body is made of metal or a metallic alloy, more preferably the material of the porous body comprises aluminum, copper, titanium, cobalt, chromium, iron, aluminum or an alloy thereof.

9. The heat sink device (10, 110, 210, 310) as claimed in any one of the preceding claims, wherein the PCM has a melting temperature between 40 and 70°C, preferably wherein the phase change material is selected from a group comprising fatty acid, fatty alcohol, hydrated salts and mixtures thereof, more preferably the phase change material is selected from a group comprising lauric acid, stearic acid, hexadecanol, octadecanol and mixtures thereof.

10. The heat sink device (10, 110, 210, 310) as claimed in any of the preceding claims, wherein the porous body (12) is obtained by additive manufacturing, preferably by selective laser melting, selective laser sintering, stereolithography or digital light processing, more preferably by selective laser melting.

11. The heat sink device (10, 110, 210, 310) as claimed in any one of the preceding claims, wherein the barrier region (24) represents 0.5% to 10% with respect to the volume of the porous body (10) and/or the core region (20) represents 10% to 25% with respect to the volume of the porous body (12) and/or the convection cooling structure (28, 128) represents 70% to 90% with respect to the volume of the porous body (12).

12. A method for producing a heat sink device (10) comprising the steps of:
- producing a porous body (12) comprising
a first region (20), referred to as core region, having a first porosity with open interconnected pores (22);
a second region (24), referred to as barrier region, having a second porosity with open interconnected pores (26), the barrier region (24) being interconnected with the core region (20) on at least a part of the periphery of the latter;
wherein the second porosity is smaller than the first porosity and is configured for preventing melted phase change material to flow therethrough from the core region (20) due to capillarity and/or gravity;
- providing a phase change material, PCM, and melting the PCM;
- impregnating the porous body (12) with the melted PCM such that the first porosity is at least partially filled with the PCM;
wherein impregnating comprises forcibly introducing the melted PCM into the core region (20) through the barrier region (24).

13. The method as claimed in claim 12, wherein melted PCM is forcibly introduced into the porous body (12) by means of a pressure difference, preferably by mechanically pushing the PCM into the porous body (12); or by drawing the melted PCM into the porous body (12) under assistance of vacuum.

14. The method as claimed in claim 12 or 13, wherein the heat sink device (110, 210, 310) further comprises a convection cooling structure (28, 128);
wherein during said impregnation step, the melted PCM is introduced into the core region (20) via the convection cooling structure (28, 128) and the barrier region (24);
the method further comprising the steps of
- solidifying the PCM
- heating the porous body (12) filled with PCM in order to melt the PCM and allow the PCM to flow out of the convection cooling structure (28, 128).

15. The method as claimed in any one of claims 12 to 14, wherein
the porous body (12) is produced by additive manufacturing, preferably by selective laser melting, selective laser sintering, stereolithography or digital light processing, more preferably by selective laser melting; and/or
wherein the porous body (12) is made of metal or a metallic alloy, preferably the material of the porous body (12) comprises aluminum, copper, titanium, cobalt, chromium, iron or an alloy thereof; and/or
wherein the phase change material is selected from a group comprising fatty acid, fatty alcohol, hydrated salts and mixtures thereof, preferably the phase change material is selected from a group comprising lauric acid, stearic acid, hexadecanol, octadecanol and mixtures thereof.
